(19) Europäisches Patentamt
European Patent Office
Office européen des brevets

(11) Veröffentlichungsnummer: **0 208 906**
**A1**

# (12) EUROPÄISCHE PATENTANMELDUNG

(21) Anmeldenummer: **86107800.4**

(22) Anmeldetag: **07.06.86**

(51) Int. Cl.⁴: **A 01 N 55/04**, B 27 K 3/36
// C07F7/22

(30) Priorität: **11.07.85 DE 3524756**

(43) Veröffentlichungstag der Anmeldung: **21.01.87**
**Patentblatt 87/4**

(84) Benannte Vertragsstaaten: **BE CH DE FR GB LI NL SE**

(71) Anmelder: **SCHERING AKTIENGESELLSCHAFT Berlin und Bergkamen, Waldstrasse 14 Postfach 15 40, D-4709 Bergkamen (DE)**

(72) Erfinder: **Landsiedel, Horst, Augustin-Wibbelt-Strasse 18, D-4750 Unna (DE)**
Erfinder: **Plum, Hans, Dr. Dipl.-Chem., Sulkshege 12, D-4700 Hamm (DE)**

(54) **Biozide Tributylzinnverbindungen.**

(57) Die Erfindung betrifft biozide Mittel, die als aktiven Wirkstoff Tri-n-butylzinnfettalkoholate enthalten, sowie deren Verwendung, insbesondere im Holzschutz.

EP 0 208 906 A1

Biozide Tributylzinnverbindungen

Tributylzinnverbindungen, z. B. Tri-n-butylzinnoxid und Tri-n-butylzinnester von Carbonsäuren, besitzen eine hohe biozide Wirkung gegen Pilze und Bakterien. Sie werden daher in großem Umfang als Wirkstoffe zur bioziden Ausrüstung von vielen Materialien und als Konservierungs- oder Desinfektionsmittel verwendet. Die biozide Wirkung der Tributylzinnverbindungen beschränkt sich nicht nur auf Mikroorganismen, sie umfaßt auch bestimmte Meeresorganismen. Diese Verbindungen verhindern daher in Antifoulingfarben einen schädlichen Bewuchs des Unterwasserschiffes mit Seepocken, Muscheln oder Algen.

Ein bedeutendes Anwendungsgebiet für Triorganozinnverbindungen ist der Schutz von frisch geschlagenem oder verbautem Holz vor Befall durch holzschädigende Pilze. Aufgrund ihrer starken Wirksamkeit und ihres breiten Wirkungsspektrums werden Tributylzinnverbindungen in großem Umfang als Fungizide in Holzschutzmitteln eingesetzt.

Bei den verwendeten Organozinnverbindungen handelt es sich im wesentlichen um Tri-n-butylzinnoxid bzw. Tri-n-butylzinnester organischer Säure, wie Tri-n-butylzinnbenzoat, -linoleat oder -naphthenat. Gewöhnlich benutzt man Lösungen dieser Stoffe in organischen Lösungsmitteln. Doch lassen sich mit Hilfe von Emulgatoren auch wäßrige Tributylzinnzubereitungen herstellen. Die Tributylzinnverbindungen sind bereits in sehr niedrigen Konzentrationen wirksam.

Maßgebend für die Wirksamkeit der verschiedenen Tributylzinnverbindungen ist in der Regel der Zinngehalt. Da dieser bei Tri-n-butylzinnestern langkettiger Carbonsäuren niedriger liegt als bei Tri-n-butylzinnoxid, müssen bei Verwendung derartiger Ester zur Erzielung der gleichen Wirkung entsprechend höhere Mengen aufgewendet werden.

...

Eine spezifische, von der Natur der verwendeten Carbonsäure abhängige biozide Wirkung ist bei Tri-n-butylzinnverbindungen bisher nicht bekannt geworden.

Die biozide Wirkung von Holzschutzmitteln läßt sich durch die sogenannten Grenzwerte ausdrücken, wobei der untere Wert die Konzentration darstellt, bei der gerade noch ein Pilzangriff erfolgt und der obere die Konzentration ist, bei der kein Angriff mehr erfolgt.

So liegen die Grenzwerte nach DIN 52 176 gegen einen typischen holzzerstörenden Pilz (Coniophora puteana) für

Tri-n-butylzinnoxid bei 0,34 - 0,70 $kg/m^3$ Holz und für Tri-n-butylzinnlinoleat entsprechend höher bei 0,92 - 1,3 $kg/m^3$.

Von großer Bedeutung für die Verwendbarkeit von Bioziden als Holzschutzmittel ist ihre Dauerbeständigkeit. Die Mittel sollen dem damit behandelten Holz einen möglichst lang anhaltenden Schutz gegen mikrobiellen Angriff verleihen. Grundsätzlich handelt es sich bei Tributylzinnverbindungen um recht beständige Stoffe, mit denen man Holzschutzmittel mit guter Dauerwirkung herstellen kann. Unter bestimmten Bedingungen, wie höhere Temperatur bzw. Einwirkung spezieller Holzinhaltsstoffe, können sie aber unter Abspaltung von Butylgruppen zu biologisch weniger wirksamen zinnorganischen Verbindungen abgebaut werden.

Ein wesentlicher Faktor für die Beständigkeit von Holzschutzmitteln ist die thermische Beständigkeit der Wirkstoffe. Biozid ausgerüstetes Holz, das der Witterung ausgesetzt ist, kann bei Sonnenbestrahlung über einen längeren Zeitraum auf über 70 °C aufgeheizt werden.

...

Es wurde nun überraschend gefunden, daß sich Verbindungen der allgemeinen Formel

$$(n\text{-}C_4H_9)_3SnOR$$

in denen R ein gegebenenfalls ungesättigter oder verzweigter aliphatischer Kohlenwasserstoffrest mit 8 - 22 C-Atomen, vorzugsweise 12 - 18 C-Atomen, ist, durch eine sehr hohe thermische Beständigkeit in damit ausgerüstetem Holz auszeichnen, die noch erheblich über der der bisher im Holzschutz viel verwendeten Verbindungen Tri-n-butylzinnoxid (TBTO) oder Tri-n-butylzinnaphthenat bzw. -linoleat (TBTN, TBTL) liegt.

Gegenstand der Erfindung sind demnach biozide Mittel, insbesondere für den Holzschutz, die als aktive Komponente eine oder mehrere dieser Verbindungen enthalten.

Die Tributylzinnverbindungen der allgemeinen Formel $(n\text{-}C_4H_9)_3Sn\text{-}OR$ im Sinne der vorliegenden Erfindung können durch Umsetzung von Tri-n-butylzinnoxid oder -chlorid mit Fettalkoholen der allgemeinen Formel ROH hergestellt werden. Der Begriff Fettalkohole umfaßt dabei Alkohole im Bereich $C_8$ - $C_{22}$ und hierbei sowohl solche auf Basis von natürlichen Fetten als auch Produkte petrochemischer Herkunft, wie sie heute nach den unterschiedlichen großtechnischen Verfahren hergestellt werden.

Bevorzugt werden hierbei technische Fettalkohole mit 8 - 22, insbesondere 12 - 18, C-Atomen, wie sie durch Hydrierung von technischen Fettsäuren hergestellt werden können, z. B. Laurylalkohol ($C_{12}H_{25}OH$), Cetylalkohol ($C_{16}H_{33}OH$) oder auch Oleylalkohol ($C_{18}H_{35}OH$).

...

Die erfindungsgemäß eingesetzten Tri-n-butylzinnalkoxide lassen sich nach an sich bekannten Verfahren durch Umsetzung von im wesentlichen stöchiometrischen Mengen Tri-n-butylzinnoxid und den entsprechenden Alkoholen herstellen, indem man die Reaktionspartner in geeigneten Lösungsmitteln, wie Xylol oder Toluol, unter Rückfluß erhitzt und das Reaktionswasser azeotrop abdestilliert. Wird als Ausgangsprodukt Tri-n-butylzinnchlorid eingesetzt, wird analog verfahren und die entstehende wässrige Salzsäure azeotrop entfernt oder durch Zusatz von NaOH gebunden.

Aufgrund ihrer ausgezeichneten bioziden Eigenschaften und ihrer hohen Beständigkeit verleihen die erfindungsgemäßen Verbindungen damit ausgerüsteten Materialien eine hohe biozide Dauerwirkung. Sie können daher als Wirkstoff in Holz- und Textilschutzmitteln, Desinfektionsmitteln oder auch zur Konservierung von Farben, Leimen, Dichtungsmitteln und Bohrölen sowie als Antifoulingwirkstoffe eingesetzt werden.

Die erfindungsgemäßen Mittel lassen sich insbesondere für den Holzschutz einsetzen, da hierdurch neben der Verhinderung des Abbaus durch holzzerstörende Pilze auch ein Schutz gegen holzverfärbende Pilze und Bakterienbefall erreicht wird. Bakterien bewirken keinen Abbau des Holzes, können aber einen Angriff durch Pilze begünstigen.

Die Mittel werden in Form von Lösungen in aromatischen und aliphatischen Benzinfraktionen vorzugsweise mit einem Siedebereich von 170 bis 220 °C, gegebenenfalls mit Farb- und Hilfsstoffen, in das Holz durch Streichen, Spritzen, Sprühen oder Tauchen eingebracht.

Des weiteren lassen sich die erfindungsgemäßen Mittel für die biozide Ausrüstung von Textilien, Kunststoffen und Baustoffen einsetzen, wobei sie zweckmäßig in Form von Zu-

...

bereitungen wie Lösungen, s. Z. in aromatischen und aliphatischen Benzinfraktionen, Ketonen oder niedrigen Alkoholen, wässrigen Emulsionen, Dispersionen mit und ohne Bindemittel und gegebenenfalls mit Zusatz von Netz-, Haft-, Emulgier- und Dispergierhilfsmitteln angewandt werden.

Die Wirkstoffkonzentrationen liegen im allgemeinen im Bereich von 0,05 bis 50 Gew.-% und werden durch die Anforderungen der Anwendung und die Aufnahmefähigkeit der Substrate bestimmt.

Für den Holzschutz werden bevorzugt Lösungen der erfindungsgemäßen Mittel in Benzinfraktionen, gegebenenfalls mit Zusatz von Penetrationsfördermitteln, Bindemitteln oder anderen Lösungsmitteln, z. B. Aromaten, in Konzentrationen von 0,05 bis 5 Gew.-% verwendet und in Mengen von 50 bis 400 g Wirkstofflösung je m² Holzoberfläche durch Streichen, Spritzen und dergleichen aufgebracht.

Ein sehr wirkungsvoller Holzschutz wird erreicht, wenn die erfindungsgemäßen Mittel, gelöst in geeigneten Substanzen, durch spezielle technische Verfahren, z. B. Doppelvakuumverfahren, Vakuumverfahren oder Vakuumdruckverfahren, in das Holz eingebracht werden, so daß eine Beladung von 0,1 bis 3,0 - vorzugsweise 0,3 bis 1,0 - kg Wirkstoff je m³ Holz erreicht wird.

Mit den erfindungsgemäßen Mitteln lassen sich durch Abmischung mit geeigneten Emulgatoren, z. B. nichtionogenen Typen, wie z. B. ethoxyliertes Nonylphenol, auch wasserverdünnbare Formulierungen erstellen, die ebenfalls für den Holzschutz eingesetzt werden können, z. B. durch Streichen, Tauchen usw. mit Emulsionen, die 0,5 bis 3 Gew.-% Wirkstoff enthalten.

Zum Schutz von Holzwerkstoffen können die erfindungsgemäßen Mittel in Form von hochkonzentrierten Lösungen bzw. Formulierungen mit Emulgatoren dem Bindemittel oder Klebstoff in Mengen von 0,1 bis 2 Gew.-%, bezogen auf Wirkstoff, zugesetzt werden.

Zum Schutz von Textilien, z. B. Baumwollgeweben, gegen Mikroorganismen lassen sich die Mittel aus Lösungen, z. B. in Ethanol, Xylol, Ketonen, mit Wirkstoffkonzentrationen von 0,05 bis 3 Gew.-% mittels Sprühen oder Tränken aufbringen, wobei gegebenenfalls Hydrophobierungsmittel zugesetzt werden können.

Zur Erweiterung des Wirkstoffspektrums, zur Erzielung besonderer Wirkung gegen spezielle Mikroorganismen oder zur insektiziden Ausrüstung lassen sich die erfindungsgemäßen Mittel mit anderen Wirkstoffen kombinieren, z. B. sind hierzu geeignet:

3-Jod-2-propynyl-butyl-carbamat,
Kupfernaphthenat,
Kupfer-8-oxychinolin,
N-Cyclohexyl-N-methoxy-2,5-dimethyl-furan-3-carbonsäureamid,
N,N-Dimethyl-N'-phenyl-N'-fluordichlormethyl-thiosulfonyl-diamid,
N-Trichlormethylthio-phthalimid,
$\gamma$-Hexachlorcyclohexan,
Permethrin.

...

Herstellungsbeispiele

Beispiel 1

2 Mol techn. Laurylalkohol (375 g) mit einer Hydroxylzahl von 295 und 1 Mol Tri-n-butylzinnoxid (598 g) werden mit ca. 1.000 ml Xylol unter Rückfluß erhitzt. Innerhalb von 3 h wird das entstandene Reaktionswasser azeotrop abdestilliert. Nach Entfernen des Lösungsmittels erhält man ein gelb gefärbtes, mittelviskoses Produkt mit einem Zinngehalt von 24,1 %, das in organischen Lösungsmitteln wie Alkoholen, Ketonen, chlorierten Kohlenwasserstoffen und Benzinen löslich ist. In Wasser ist die Verbindung schwer löslich.

Beispiel 2

2 Mol eines technischen Cetylalkohols (510 g) mit einer Hydroxylzahl von 215 und 1 Mol TBTO (598 g) werden in ca. 1.000 ml Xylol unter Rückfluß erhitzt. Innerhalb von ca. 3 h wird das entstehende Reaktionswasser azeotrop abdestilliert. Nach Abtrennung des Lösungsmittels erhält man als Rückstand ein gelb gefärbtes, hochviskoses Produkt mit einem Zinngehalt von 21,3 %, das sich in organischen Lösungsmitteln wie Alkoholen, Ketonen, chlorierten Kohlenwasserstoffen und Benzinen leicht löst. In Wasser ist die Verbindung schwer löslich.

Beispiel 3

2 Mol eines technischen Oleylalkohols (534 g) mit einer Hydroxylzahl von 205 und 1 Mol TBTO (598 g) werden mit ca. 1.000 ml Xylol unter Rückfluß erhitzt. Innerhalb von ca. 3 h wird das entstehende Reaktionswasser azeotrop abdestilliert. Nach Abtrennung des Lösungsmittels erhält man

...

ein gelbliches, halbfestes Produkt mit einem Zinngehalt von 20,4 %, das sich in organischen Lösungsmitteln wie Alkoholen, Ketonen, chlorierten Kohlenwasserstoffen und Benzinen leicht löst, in Wasser dagegen schwer löslich ist.

Formulierungsbeispiele

Beispiel 1

Eine farblose, wenig Bindemittel enthaltende Holzschutzgrundierung, bestehend aus

| | | |
|---|---|---|
| 2,0 | Gew.-Tl. | Reaktionsprodukt aus Herstellungsbeispiel 1 |
| 0,2 | " " | Permethrin 25 - 75 |
| 6 | " " | Diäthylenglykolmonobutyläther |
| 7 | " " | langöliges Alkydharz (ca. 33 % Phthalatharz, ca. 67 % Triglyceride pflanzlicher Fettsäuren) |
| 84,8 | " " | White spirit |

zeigt ein gutes Eindringvermögen und läßt sich sehr gut als Holzschutzgrundierung für Bauholz verwenden.

Beispiel 2

Eine farbige Holzschutz-Lasur, bestehend aus

| | | |
|---|---|---|
| 3 | Gew.-Tl. | Reaktionsprodukt aus Herstellungsbeispiel 3 |
| 40 | " " | langöliges Alkydharz (ca. 33 % Phthalatharz, ca. 67 % Triglyceride pflanzlicher Fettsäuren) |
| 0,5 | " " | Sikkative (Co-, Mn-, Pb-Salze) |
| 0,6 | " " | Antiabsetzmittel |
| 9,0 | " " | Eisenoxidrotpaste |
| 1,0 | " " | Eisenoxidschwarzpaste |
| 6,6 | " " | Diäthylenglykolmonobutyläther |
| 39,3 | " " | White spirit. |

Beispiel 3

Eine wasserverdünnbare Wirkstoffkombination, bestehend aus

| | | |
|---|---|---|
| 18 | Gew.-Tl. | Reaktionsprodukt aus Herstellungsbeispiel 2 |
| 4,5 | " " | N,N'-Dimethyl-N-phenyl-N'-fluordichlormethyl-thiosulfonyldiamid |
| 77,5 | " " | nichtionogener Emulgator |

läßt sich in weiten Bereichen (1 : 5 bis 1 : 50) mit Wasser verdünnen und ergibt stabile Emulsionen zum Streichen, Spritzen oder Tauchen von z. B. frisch geschlagenem Holz. Die unverdünnte Formulierung wird in Konzentrationen von 0,2 bis 3 Gew.-% zur bioziden Ausrüstung von wässrigen Anstrichsystemen, z. B. Dispersionen auf Acrylat-Basis, eingesetzt.

Beispiel 4

Eine Wirkstofflösung zur bioziden Ausrüstung von Textilien, z. B. Baumwollsegeltuch, bestehend aus

| | | |
|---|---|---|
| 2,5 | Gew.-Tl. | Reaktionsprodukt aus Beispiel 2 |
| 3,6 | " " | mikronisiertes Polyethylenwachs |
| 93,9 | " " | geruchsarmes, synthetisches Isoparaffin |

läßt sich entweder durch Sprühen der Lösung oder durch Tauchen der zu behandelnden Materialien aufbringen.

Untersuchung der Beständigkeit in Holz

Die Dauerbeständigkeit von bioziden Holzschutzmitteln läßt sich in Lagerversuchen bestimmen. Hierbei werden Holzklötzchen aus Kiefernsplintholz in den Größen 5,0 x 2,5 x 1,5 cm mit Lösungen der zu prüfenden Biozide ge-

...

tränkt und nach dem Verdunsten des Lösungsmittels 4 Wochen bei 20 °C und anschließend 2 Wochen bei 80 °C gelagert. Danach zerkleinert man die Holzklötzchen und extrahiert in 24 h mit Äthanol/HCl-Lösung (0,3 % HCl).

In den Extrakten werden sowohl Gesamtzinn als auch der Tri-n-butylzinngehalt bestimmt.

Tabelle 1

Abbaubeständigkeit der Tri-n-butylzinnverbindungen

| | | | Extrakt | |
|---|---|---|---|---|
| Tränklösung | aufgenommene Menge Sn | TBT-Gehalt der Ausgangsstoffe | Gesamtzinngehalt | TBT-Gehalt der Extrakte |
| TBTO | 28,0 mg | 97,0 % | 26,9 mg | 40,0 % |
| TBTN | 27,0 mg | 95,0 % | 24,7 mg | 47,0 % |
| $TBT-OR^1$ | 28,5 mg | 96,5 % | 26,5 mg | 75,0 % |
| $TBT-OR^2$ | 27,8 mg | 96,0 % | 26,0 mg | 78,0 % |
| $TBT-OR^3$ | 29,0 mg | 95,5 % | 26,3 mg | 78,8 % |

$R^1 = C_{12}H_{25}$
$R^2 = C_{16}H_{33}$
$R^3 = C_{18}H_{35}$

...

Während die Tributylzinnverbindungen TBTO und TBTN infolge der Belastung durch den die Wärmebeanspruchung eine Abnahme des Tributylzinngehaltes bis auf 40 - 47 % zeigen, ist die Abnahme bei den drei Fettalkohol-Produkten $TBT-OR^1$, $TBT-OR^2$ und $TBT-OR^3$ bedeutend geringer. Es sind hierbei nach dem Test noch über 75 % Tributylzinnverbindung erhalten geblieben.

...

Biozide Wirkung

Die erfindungsgemäßen Tributylzinnverbindungen der allgemeinen Formel $(n\text{-}C_4H_9)_3Sn\text{-}OR$ besitzen eine sehr starke biozide Wirkung gegen zahlreiche Bakterien und Pilze.

Zur Bestimmung der bioziden Wirkung werden Papierrundfilter mit einem Durchmesser von 5,5 cm in abgestuften Konzentrationen der Tributylzinnverbindung der allgemeinen Formel $(n\text{-}C_4H_9)_3Sn\text{-}OR$ in Äthanol getränkt und nach dem Trocknen im Agar-Auflegetest gegen Pilze und Bakterien untersucht. Als Maß für die biozide Wirkung dient die Größe der Hemmzone um die Probe (angegeben in mm).

...

Tabelle 2

Biozide Wirkung der Tributylzinnverbindungen (Agar-Auflegetest)
(Hemmzonen um die Proben in mm)

| Wirkstoff | Gew.-% in Tränklösung * | Bakterien | | Pilze | | | |
|---|---|---|---|---|---|---|---|
| | | Bacillus mesent. | Proteus vulgaris | Aspergillus ustus | Cladosporium herbarum | Aureobas. pullulans | Poria monticula |
| TBTO | 0,5 | 4 - 5 | 1 - 2 | 3 - 4 | 4 - 5 | 1 - 2 | 6 - 8 |
| | 1,01 | 5 - 6 | 2 - 3 | 5 - 7 | 7 - 9 | 3 - 4 | 8 -10 |
| | 1,5 | 10 -12 | 4 - 5 | 10 -12 | 10 -12 | 5 - 6 | 12 -15 |
| TBTN | 1,0 | 2 - 3 | 0 - 1 | 2 - 3 | 3 - 4 | 0 - 1 | 3 - 4 |
| | 2,0 | 3 - 4 | 1 - 2 | 3 - 4 | 5 - 6 | 2 - 3 | 5 - 6 |
| | 3,0 | 6 - 8 | 2 - 3 | 6 - 8 | 8 -10 | 3 - 4 | 8 -10 |
| TBT-OR[1] | 1,0 | 2 - 3 | 1 - 2 | 3 - 4 | 3 - 4 | 1 - 2 | 4 - 5 |
| | 2,0 | 2 - 3 | 2 - 3 | 3 - 4 | 5 - 7 | 1 - 2 | 5 - 6 |
| | 3,0 | 6 - 8 | 3 - 4 | 6 - 8 | 8 -10 | 3 - 4 | 8 -10 |
| TBT-OR[2] | 1,0 | 2 - 3 | 0 - 1 | 2 - 3 | 4 - 5 | 1 - 2 | 3 - 4 |
| | 2,0 | 3 - 4 | 2 - 3 | 3 - 4 | 5 - 6 | 2 - 3 | 5 - 6 |
| | 3,0 | 5 - 7 | 4 - 5 | 5 - 7 | 7 - 9 | 3 - 4 | 7 - 9 |

*Tabelle 2* - *Fortsetzung* -

*Biozide Wirkung der Tributylzinnverbindungen (Agar-Auflegetest)*
*(Hemmzonen um die Proben in mm)*

| Wirkstoff | Gew.-% in Tränklösung * | Bakterien | | Pilze | | | |
|---|---|---|---|---|---|---|---|
| | | Bacillus mesent. | Proteus vulgaris | Aspergillus ustus | Cladosporium herbarum | Aureobas. pullulans | Poria monticula |
| $TBT\text{-}OR^3$ | 1,0 | 2 - 3 | 0 - 1 | 1 - 2 | 2 - 3 | 0 - 1 | 2 - 3 |
| | 2,0 | 3 - 4 | 1 - 2 | 3 - 4 | 5 - 6 | 2 - 3 | 4 - 5 |
| | 3,0 | 5 - 7 | 3 - 4 | 5 - 7 | 7 - 9 | 3 - 4 | 6 - 8 |
| ohne | | 0 | 0 | 0 | 0 | 0 | 0 |

*) Konzentrationen entsprechend den TBT-Gehalten

Patentansprüche

1. Biozide Mittel, dadurch gekennzeichnet, daß sie als aktiven Wirkstoff eine oder mehrere der Organozinnverbindungen der allgemeinen Formel

$$(n-C_4H_9)_3Sn-OR,$$

in der R ein gegebenenfalls ungesättigter oder verzweigter aliphatischer Kohlenwasserstoffrest mit 8 bis 22 C-Atomen ist, enthalten.

2. Biozide Mittel gemäß Anspruch 1, dadurch gekennzeichnet, daß R ein linearer gesättiger Kohlenwasserstoffrest mit 12 bis 18 C-Atomen ist.

3. Verwendung der bioziden Mittel gemäß Anspruch 1 zur Bekämpfung von Bakterien, Pilzen, Algen und Unterwasserbewuchsorganismen.

4. Verwendung der bioziden Mittel gemäß Anspruch 1 im Holzschutz zur Bekämpfung von holzschädigenden Mikroorganismen.

Europäisches Patentamt

# EUROPÄISCHER RECHERCHENBERICHT

0208906
Nummer der Anmeldung

EP 86 10 7800

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 861 949 (M. ONOZUKA et al.) * Spalte 2, Zeilen 15-61; Spalte 5, Zeile 44 - Spalte 6, Zeile 20; Tabelle 4; Verbindungen 7,9,14,16 und Beziehungsverbindungen 6,8,16,18 * --- | 1-4 | A 01 N 55/04<br>B 27 K 3/36<br>C 07 F 7/22 |
| A | DE-A-3 006 560 (NITTO KASEI CO. LTD.) * Seite 8, Zeile 14 - Seite 9, Zeile 13; Seite 15, Zeile 6 * --- | 1-4 | |
| A | US-A-3 492 327 (A.G. DAVIES) * Spalte 2, Zeile 66 - Spalte 3, Zeile 42; Tabelle; Patentansprüche * --- | 1-4 | |
| A | US-A-3 824 210 (L.F. KING) * Spalte 4, Zeilen 26-53; Tabelle I, Nummer X und XII * --- | 1-3 | RECHERCHIERTE SACHGEBIETE (Int. Cl.4)<br>A 01 N<br>B 27 K<br>C 07 F |
| A | DE-A-2 739 376 (B.P.) * Patentansprüche, Seite 8, Zeilen 10-19 * --- | 1-4 | |
| A | FR-A-1 386 350 (MICRO-BIOLOGICAL LABORATORIES) * Patentansprüche IA und II * --- -/- | 1-3 | |

Der vorliegende Recherchenbericht wurde für alle Patentansprüche erstellt.

| Recherchenort | Abschlußdatum der Recherche | Prüfer |
|---|---|---|
| DEN HAAG | 20-10-1986 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

# EUROPÄISCHER RECHERCHENBERICHT

0208906
Nummer der Anmeldung

EP 86 10 7800



## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 542 843 (CARLISLE CHEMICAL WORKS) * Patentansprüche * ----- | 1-4 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 20-10-1986 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82